Europäisches Patentamt

(19) European Patent Office

Office européen des brevets

(11) Numéro de publication: **0 222 633**
**B1**

(12) **FASCICULE DE BREVET EUROPEEN**

(45) Date de publication du fascicule du brevet:
**10.01.90**

(51) Int. Cl.⁴: **B61D 39/00, B60J 7/06**

(21) Numéro de dépôt: **86402159.7**

(22) Date de dépôt: **02.10.86**

(54) Dispositif de bâchage mécanique pour véhicules divers et notamment pour wagons.

(30) Priorité: **02.10.85 FR 8514613**

(43) Date de publication de la demande:
**20.05.87 Bulletin 87/21**

(45) Mention de la délivrance du brevet:
**10.01.90 Bulletin 90/2**

(84) Etats contractants désignés:
**AT DE ES GB IT SE**

(56) Documents cités:
**DE-C- 923 669**
**FR-A- 2 552 378**
**FR-A- 2 563 476**
**GB-A- 2 157 246**
**US-A- 3 433 470**

(73) Titulaire: **Noyon, Gustave, 7, Allée de la Grotte,
F-93160 Noisy-le-Grand(FR)**
Titulaire: **Hey, Geoffrey, Church Farmouse Sheriff
Hutton, York, Y06 1PY(GB)**

(72) Inventeur: **Noyon, Gustave, 7, Allée de la Grotte,
F-93160 Noisy-le-Grand(FR)**
Inventeur: **Hey, Geoffrey, Church Farmouse Sheriff
Hutton, York, Y06 1PY(GB)**

(74) Mandataire: **Caunet, Jean et al, Cabinet BEAU DE
LOMENIE 55, rue d'Amsterdam, F-75008 Paris(FR)**

ACTORUM AG

## Description

La présente invention concerne un dispositif de bâchage mécanique perfectionné pour des véhicules divers, tels que des camions, des remorques routières, des wagons de chemin de fer ...

Des dispositifs de bâchage sont connus par la revue générale des chemins de fer volume 92 d'Octobre 1973, pages 570 à 572. Ils comportent une bâche qui, en position fermée, recouvre tout le véhicule entre les dosserets extrêmes. Cette bâche est supportée par des arceaux verticaux dont les extrémités inférieures sont équipées de chaque côté de galets pouvant rouler sur des rails fixes disposés en retrait sous les bordures de rive du plateau du véhicule. Les arceaux extrêmes sont verrouillés pour le transport sur les dosserets le long d'un joint d'étanchéité. Pour décharger le véhicule, il faut déverrouiller les arceaux extrêmes et pousser la bâche successivement vers un bout, puis vers l'autre.

Les dispositifs connus présentent un grave inconvénient. En effet, si en cours du transport, le chargement se déplace, il peut engager la trajectoire des arceaux pour l'ouverture. Si cet engagement est faible, l'ouverture reste possible bien que difficile, mais on risque d'endommager le chargement ; par contre, si cet engagement est important, l'ouverture est impossible et, pour dégager les arceaux, il faut repousser le chargement, ce qui parfois nécessite de découper la bâche.

Par le brevet allemand n° 923.669, un connaît un véhicule sur rail dont la superstructure formant les parois latérales et le toît comporte deux éléments coulissants rigides guidés le long de rails inférieurs du châssis. Pour que l'un quelconque de ces éléments qui normalement se prolongent mutuellement, puisse s'ouvrir par translation et venir recouvrir l'autre élément, chacun desdits éléments est constitué par deux demi-coques articulées l'une sur l'autre suivant l'axe longitudinal médian supérieur de ladite superstructure ; de plus, chaque rive d'un élément est guidée le long du rail correspondant par au moins deux chariots et est reliée à chaque chariot par un dispositif particulier qui se déplace en translation en même temps qu'il tourne ; lorsque ces dispositifs ne sont pas sollicités, la rive inférieure considérée est situé en regard de la bordure correspondante du châssis ; par contre, lorsque lesdits dispositifs sont manoeuvrés, cette rive s'écarte des chariots vers l'extérieur en même temps qu'elle s'élève, de sorte que l'élément en question s'ouvre par pivotement de ses demi-coques et monte ; ainsi, il peut être déplacé en translation longitudinale pour venir coiffer l'élément rétracté qui n'a pas bougé.

L'enseignement tiré de ce brevet allemand n'est pas directement applicable au dispositif de bâchage connu précité, dés lors que chaque arceau ne forme pas avec ses voisins par l'intermédiaire de la bâche un ensemble rigide comparable à chacun des éléments en deux demi-coques de ce brevet ; en particulier, les dispositifs d'écartement et de soulèvement du brevet allemand ne peuvent s'appliquer qu'aux demi-coques rigides et il est pratiquement impossible de les adapter à des arceaux dès lors que ceux-ci ne sont pas stables dans un plan vertical dès que la bâche est détendue pendant son repliement.

En ce qui concerne l'articulation supérieure des demi-coques prévue dans ledit brevet allemand, cette articulation est géométriquement parfaitement définie puisque les demi-coques qu'elle relie sont rigides. La revue générale des chemins de fer volume 75 de Septembre 1956, pages 446 et 447 montre que des demi-arceaux de toîture seulement peuvent être prévus, mais cette revue n'enseigne pas, bien qu'elle soit postérieure au brevet allemand n° 923.669, que ces demi-arceaux de toîture peuvent être articulés deux à deux l'un sur l'autre. Par conséquent, le transfert de l'enseignement de ce brevet allemand pour des demi-coques rigides à des arceaux de bâchage ne semble pas avoir été concevable pour l'homme de l'art.

Par ailleurs, lorsqu'il s'agit du dispositif de bâchage mécanique connu, évoqué en premier, son verrouillage étanche sur chaque dosseret extrême du véhicule met en oeuvre deux sauterelles de chaque côté et une sauterelle en haut. Ces sauterelles sont commandées, par l'intermédiaire de tringleries latérales, par des organes de manoeuvre situés des deux côtés. Dans ces conditions, l'opération de verrouillage est longue et difficile en raison notamment du manque de synchronisme, de la raideur des sauterelles et du mauvais traitement auquel les matériels sont soumis. De plus, elle nécessite l'immobilisation de deux opérateurs pour exécuter la manoeuvre. Par ailleurs, l'étanchéité n'est pas toujours parfaitement assurée ce qui peut conduire à une dégradation du chargement transporté.

La présente invention a pour but de perfectionner ces dispositifs connus de bâchage mécanique en vue :
- de faciliter leur ouverture, notamment lorsque le chargement s'est déplacé au cours du transport,
- concomitamment d'assurer facilement, sûrement et rapidement par un seul opérateur la fixation des arceaux extrêmes sur les dosserets correspondants et subsidiairement une étanchéité parfaite de la jonction de la bâche avec ceux-ci.

Dans ce but, l'invention réside :
- en ce que chaque arceau est constitué par deux éléments symétriques dont les extrémités supérieures, situées dans la zone médiane du véhicule sont articulées l'une sur l'autre autour d'un axe et dont les extrémités inférieures roulantes sont susceptibles d'être écartées du châssis en s'élevant,
- en ce que chaque rail est supporté par le châssis par l'intermédiaire d'un mécanisme d'écartement à deux positions, l'une dans laquelle les arceaux sont rétractés (trait fort ) pour passer au gabarit tout en recouvrant le chargement sans y toucher et l'autre ( trait fin ) dans laquelle les arceaux sont écartés pour s'éloigner avec la bâche du chargement,
- et en ce que les deux éléments de chaque arceau extrême et le pourtour du dosseret conjugué sont profilés en regard pour pouvoir s'emboîter l'un dans l'autre lors du rapprochement desdits éléments et se déboîter l'un de l'autre lors de l'écartement de ces éléments afin d'assurer le verrouillage du dispositif de bâchage en position de fermeture.

De préférence, une garniture compressible d'étanchéité, en mousse notamment, est interposée entre les éléments profilés de chaque arceau extrême et le pourtour profilé du dosseret conjugué pour assurer l'étanchéité de la jonction entre le dispositif de bâchage et les dosserets.

Suivant une forme de réalisation particulièrement avantageuse, les éléments de chaque arceau extrême sont profilés en U et contiennent la garniture en mousse, tandis que le pourtour du dosseret conjugué est susceptible de s'emboîter dans ces profilés en U et présente au moins deux éléments saillants destinés à comprimer la garniture pour assurer l'étanchéité et entre lesquels un vide de décompression est ménagé.

Le mécanisme d'écartement de chaque rail est constitué par au moins deux bras fixés à celui-ci et à un arbre qui est monté tournant dans des paliers du châssis et dont l'amplitude de pivotement est limitée à deux positions extrêmes des bras dans lesquelles les galets des arceaux roulant sur le rail considéré sont situés en retrait de la rive correspondante du véhicule, les deux arbres étant accouplés à un dispositif d'actionnement.

Le dispositif d'actionnement des arbres d'écartement des rails est constitué par au moins un vérin dont le cylindre et la tige de piston, s'étendant entre les arbres, sont attelés aux équipages pivotants portés par ces arbres, des butées fixes limitant la course de levage de chacun de ceux-ci.

Le dispositif comporte, pour assurer le positionnement des éléments des arceaux extrêmes en regard des dosserets avant leur emboîtement étanche, quatre vérins conjugués avec les quatre éléments précités, le composant mobile en translation de chaque vérin présentant en saillie un organe d'attelage susceptible de prendre en charge l'élément d'arceau conjugué en fin de course de celui-ci vers le dosseret correspondant.

L'un des composants de chacun des vérins de positionnement est fixé sur le châssis du véhicule, tandis que l'autre composant est muni d'un doigt pousseur traversant au moins une lumière ménagée dans une plaque fixe, lumière qui présente une rampe inclinée précédant, en direction du dosseret correspondant, une partie rectiligne parallèle au rail conjugué et maintenant le doigt en regard d'un taquet de l'élément d'arceau à positionner pour qu'il déplace celui-ci vers ledit dosseret lorsqu'il est actionné par le vérin, la rampe inclinée permettant de faire tourner le composant de vérin porte-doigt autour de son axe et ainsi de placer le doigt hors de la trajectoire suivie par l'élément d'arceau considéré.

Le vérin d'écartement des arceaux et les vérins de positionnement de ceux-ci sont susceptibles d'être branchés, par l'intermédiaire d'un distributeur manuel (D), sur au moins une pompe à main portée par le véhicule et intégrée dans un circuit hydraulique comprenant, d'une part, des clapets pilotés verrouillant les vérins et, d'autre part, des organes de fin de course commandés par les éléments d'arceaux et montés en série pour que le vérin d'écartement ne soit alimenté pour provoquer la rétraction des arceaux que lorsque les vérins de positionnement sont tous parvenus en fin de course.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :

- la figure 1 est une élévation à petite échelle d'un wagon à bâchage mécanique, la bâche étant repoussée d'un côté ;
- la figure 2 est une coupe transversale schématique montrant, à plus grande échelle, une première forme de réalisation du dispositif de bâchage selon l'invention, dans la position rétractée en trait plein épais et dans la position expansée en trait plein fin.
- la figure 3 est une vue analogue à la figure 2 se rapportant à une deuxième forme de réalisation du dispositif de bâchage selon l'invention,
- la figure 4 est une vue partielle analogue à la figure 2 mais agrandie, illustrant la partie du mécanisme d'écartement d'un rail désignée par la flèche F sur cette figure 2,
- la figure 5 est une élévation latérale partielle prise suivant la flèche G de la figure 4 et représentant un pied d'arceau intermédiaire guidé le long d'un rail ;
- la figure 6 est une vue analogue à la figure 5 illustrant le guidage du pied d'un arceau extrême et une première forme de réalisation du dispositif de positionnement de celui-ci relativement au dosseret homologue droit,
- la figure 7 est une coupe prise, à plus grande échelle, suivant la ligne VII-VII de la figure 6 ;
- la figure 8 est une vue analogue à la figure 6 concernant une deuxième forme de réalisation du dispositif de positionnement de l'arceau extrême de gauche juste avant que ce dispositif prenne en charge ledit arceau cette figure 8 étant prise en coupe suivant la ligne VIII-VIII de la figure 10,
- la figure 9 est une vue analogue à la figure 8 montrant le dispositif de cette deuxième forme de réalisation lorsqu'il positionne l'arceau extrême de gauche en regard du dosseret homologue,
- la figure 10 est une coupe prise suivant la ligne X-X de la figure 9 et correspondant à la figure 4,
- la figure 11 est une coupe prise, à plus grande échelle, suivant la ligne XI-XI de la figure 2 lorsque les arceaux sont rétractés et qu'un dosseret du wagon est coiffé par l'arceau extrême correspondant ;
- la figure 12 est un schéma illustrant le circuit de commande hydraulique, automatique et autonome, du dispositif de bâchage.

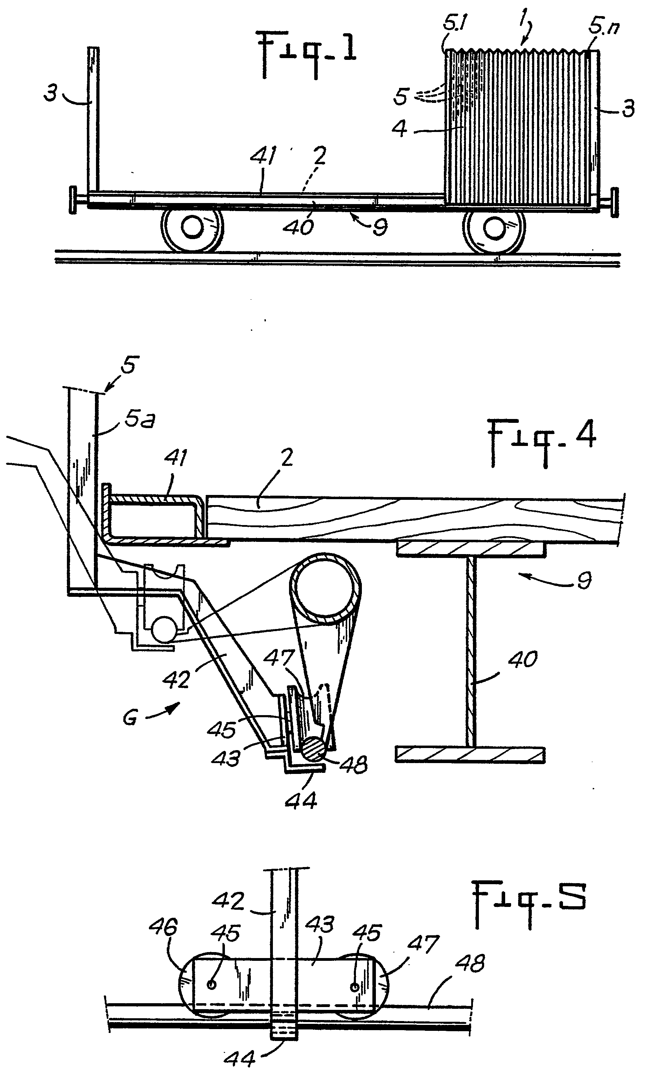

Ainsi que cela ressort de la figure 1, le dispositif de bâchage mécanique 1 équipe un wagon plat présentant un plateau 2 supporté par un châssis 9 auquel sont rigidement fixés des dosserets extrêmes 3.

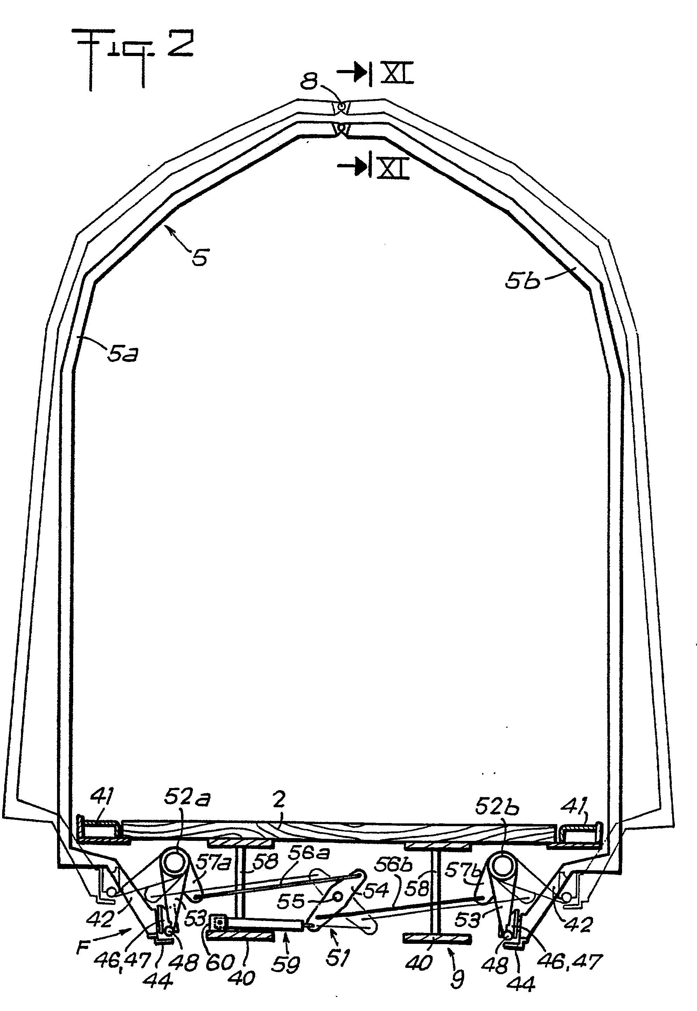

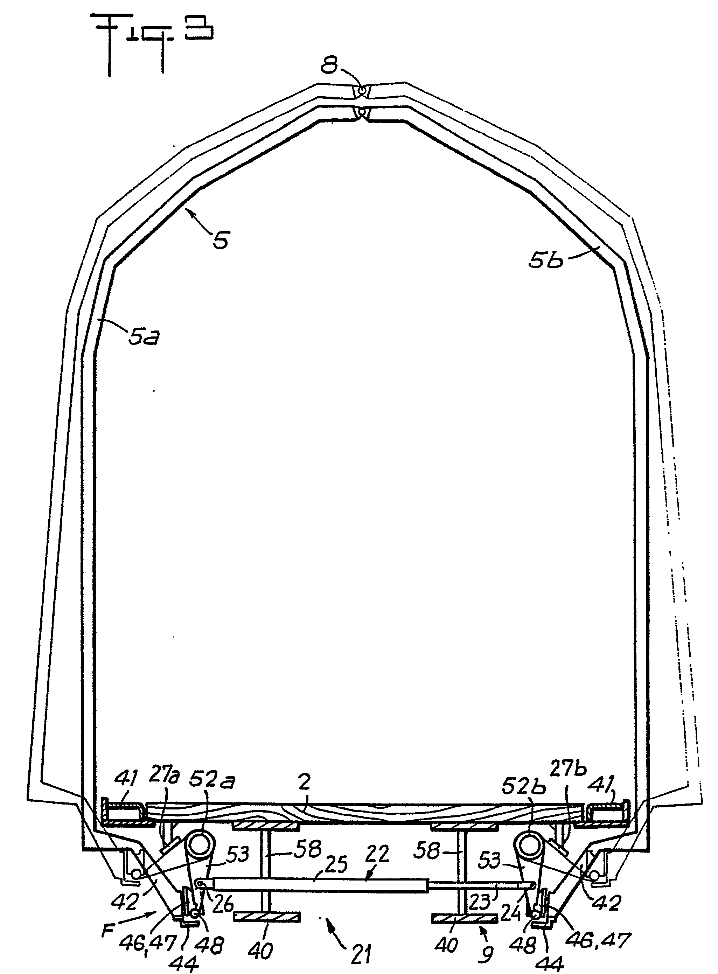

Une bâche 4 est supportée par des arceaux 5 dont les extrémités inférieures ou pieds sont munis de galets fous 46, 47, guidés le long de rails 48 reliés au châssis 9 par l'intermédiaire d'un mécanisme d'écartement 51 ou 21 . De plus, chaque arceau 5 est constitué par deux éléments symétriques 5a et 5b ou demi-arceaux dont les extrémités supérieures sont reliées, dans le plan longitudinal de symétrie du wagon, par un axe d'articulation 8 leur permettant, sous l'action du mécanisme d'écartement précité, décrit en détail dans ce qui suit, de pivoter l'un par rapport à l'autre. Ce pivotement accompagné d'un soulèvement permet de passer de la position rétractée représentée en trait continu épais sur les figures 2 et 3 à la position écartée illustré en trait continu fin sur les mêmes figures et inversement lorsque le pivotement s'effectue en sens opposé et s'accompagne d'un abaissement. Dans la position rétractée, les arceaux extrêmes 5.1 et 5.n coiffent les dosserets 3 s'ils sont bien positionnés et, dans la position écartée, ils peuvent échapper à ces dosserets.

Dans l'exemple représenté, le châssis 9 comporte des brancards longitudinaux 40 et des poutres de rive 41 reliés par des traverses non représentées. L'extrémité inférieure de chaque demi-arceau 5a est prolongée par une ferrure rentrante 42.

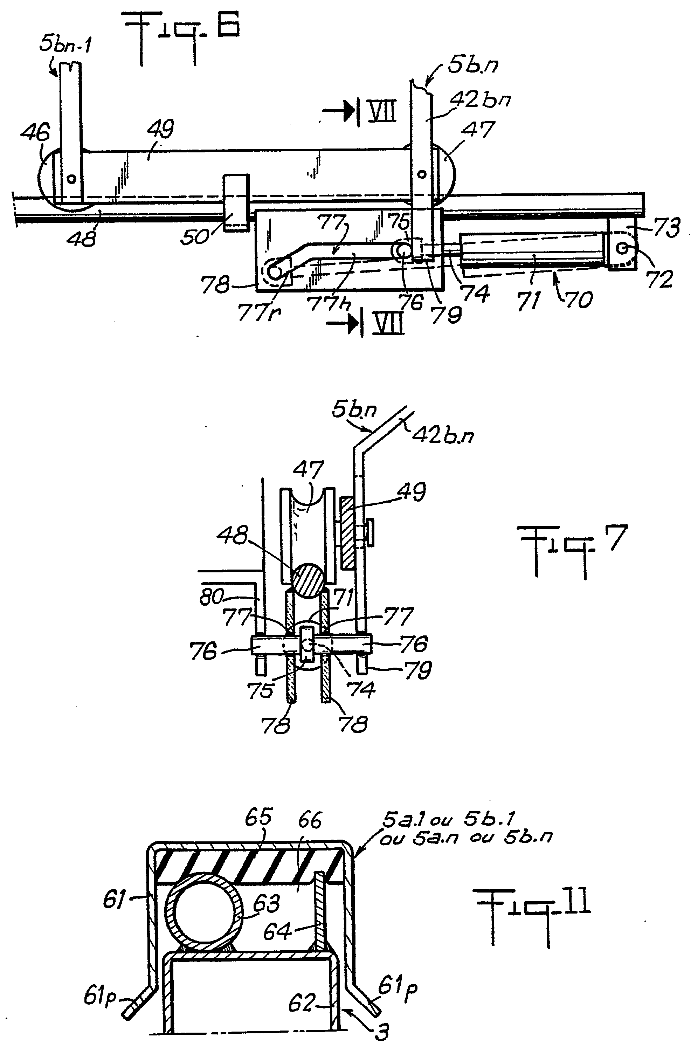

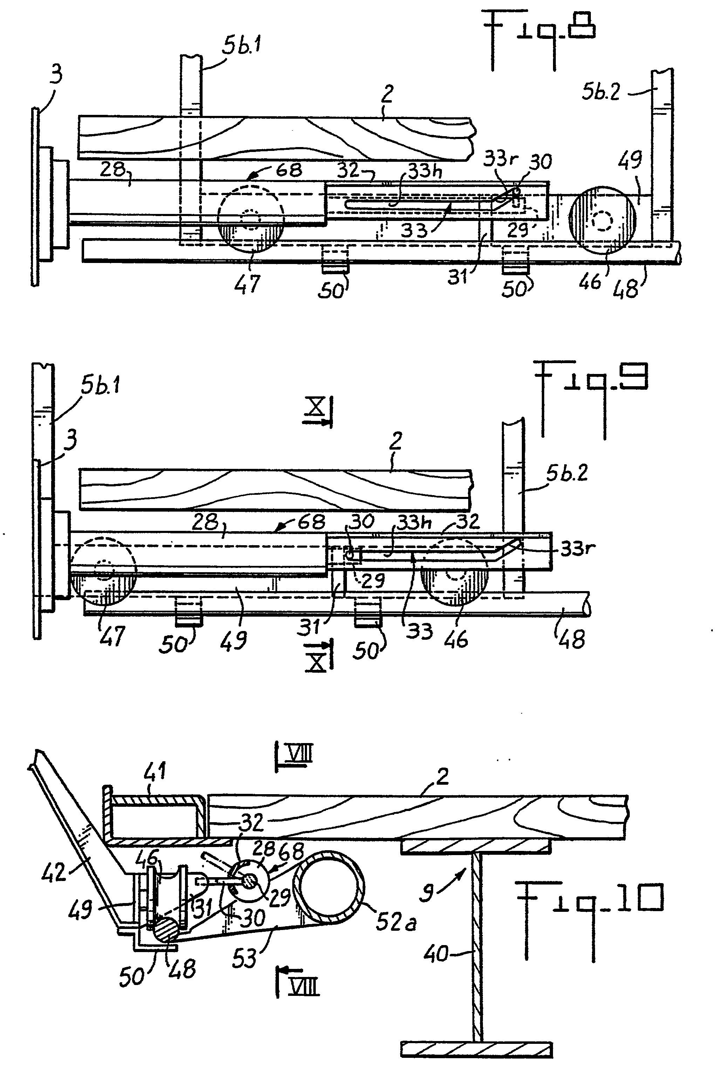

Lorsqu'il s'agit d'un arceau intermédiaire 5 (figures 4 et 5), sur chaque ferrure de pied 42 sont fixées rigidement une barrette longitudinale 43 et une patte médiane de retenue 44 ; la barrette 43 est munie de part et d'autre de la ferrure 42 d'axes 45 autour desquels sont montés fous deux galets 46 et 47 en forme de diabolos ; ceux-ci s'appuient pour leur guidage par roulement sur une barre ronde 48 constituant l'un des deux rails précités parallèles à l'axe longitudinal du wagon et la patte 44 s'étend en dessous de cette barre pour éviter le déboîtement des galets.

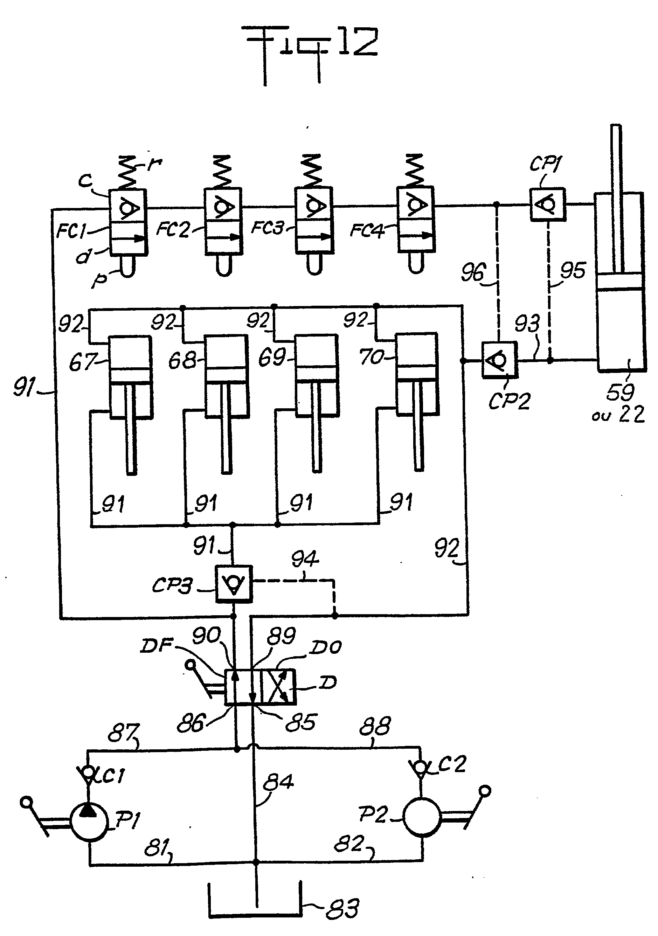

Lorsqu'il s'agit d'un arceau extrême 5.1 ou 5.n (figures 6 et 7), sur chaque ferrure de pied 42 est disposée une barrette longitudinale 49 la reliant à la ferrure de pied 42 de l'arceau suivant 5.2 ou précédent 5.n-1. La barrette 49 est équipée, comme la précédente 43, de galets fous 46 et 47 guidés le long de la barre ronde 48 ou rail de guidage sous lequel fait saillie une patte de retenue 50.

Suivant une première forme de réalisation illustrée par le mécanisme précité 51, prévu pour l'écartement symétrique des rails 48 accompagné d'un soulèvement et, inversement, le rapprochement symétrique desdits rails accompagné d'un abaissement, comporte tout d'abord :
- un arbre tubulaire 52a s'étendant parallèlement à l'axe longitudinal du wagon et monté tournant dans des paliers extrêmes, non représentés, du châssis 9, arbre qui se trouve relié rigidement au rail 48 des demi-arceaux 5a.1 à 5a.n par des bras 53 situés hors de la trajectoire suivie par les galets 46 et 47 de ces demi-arceaux,
- et, de même, un arbre tubulaire 52b s'étendant parallèlement à l'axe longitudinal du wagon et monté tournant dans des paliers extrêmes, non représentés, du châssis 9, arbre qui se trouve relié rigidement au rail 48 des demi-arceaux 5b.1 à 5b.n par des bras 53 situés hors de la trajectoire suivie par les galets 46 et 47 de ces demi-arceaux.

Le mécanisme 51 comporte également un palonnier 54 monté pivotant autour d'un axe central 55 relativement au châssis 9 et relié à ses extrémités libres par des bielles de transmission 56a et 56b à des manivelles 57a et 57b calées sur les arbres 52a et 52b, les bielles traversant des fenêtres 58 ménagées dans les brancards 40 du châssis.

Cette cinématique est telle que, en position rétractée (trait épais), les rails 48 sont équidistants de l'axe longitudinal de symétrie du wagon et qu'il en est de même dans la position écartée (trait fin), mais en s'éloignant de cet axe et en s'élevant grâce au pivotement. Dès lors, les demi-arceaux 5a et 5b peuvent être ou bien rétractés pour que la bâche 4 recouvre le chargement en passant au gabarit ferroviaire ou bien écartés pour que les arceaux puissent coulisser et la bâche se plisser sans toucher au chargement, même si celui-ci a bougé pendant le transport.

Il est important de remarquer (figures 2 et 3) que les ferrures 42 des arceaux sont cambrées pour s'incliner sous les poutres de rive 41 et le plateau 2. En outre, quelle que soit la position occupée par les arceaux (rétractée en trait épais ou écartée en trait fin), la partie terminale desdites ferrures 42 et les équipements qui l'assujetissent 43 à 50, 52, 53, 57 sont toujours situés en retrait des poutres de rive 41 sous le plateau 2 et ne sont par conséquent pas accessibles aux engins de manutention sur quai qui pourraient les endommager.

Le mécanisme 51 comporte en outre, pour manoeuvrer le palonnier 54, un vérin 59 (figure 2) dont les deux composants coulissants (cylindre et tige de piston) sont articulés l'un dans une chape 60 du châssis 9 et l'autre sur le palonnier 54.

Suivant la deuxième forme de réalisation illustrée par la figure 3, le mécanisme précité 21 prévu pour écarter et soulever les rails 48 ou pour les rapprocher et les abaisser n'intervient pas forcément de façon symétrique pour toutes les positions intermédiaires. Mais il est extrêmement simplifié puisqu'il se limite à au moins un vérin 22 s'étendant transversalement au châssis 9 travers les fenêtres 58 des brancards 40 de celui-ci. La tige de piston 23 de chaque vérin 22 est articulée autour d'un axe 24 sur le bras correspondant 53 de l'arbre 52b et une prolonge du cylindre 25 du vérin considéré est articulée autour d'un axe 26 sur le bras en regard de l'arbre 52a.

Pour qu'en fin de course d'écartement (position représentée en trait fin), les demi-arceaux 5a et 5b soient disposés symétriquement l'un de l'autre par rapport au plan longitudinal médian du véhicule où se trouvent les axes 8, certains au moins des bras 53 de l'arbre 52a coopèrent avec des butées fixes d'arrêt 27a et de même, certains au moins des bras 53 de l'arbre 52b coopèrent avec des butées fixes d'arrêt 27b.

Quelle que soit la forme de réalisation choisie du mécanisme d'écartement, les mécanismes 51 (figure 2) et 21 (figure 3) n'étant donnés qu'à titre d'exemples préférentiels mais non restrictifs, il peut être avantageux de profiter de l'expansion et de la rétraction des demi-arceaux 5a et 5b pour assurer automatiquement la fixation des arceaux extrêmes 5.1 et 5.n sur les dosserets 3 correspondants et subsidiairement leur jonction étanche.

A cet effet et ainsi que cela ressort clairement de la figure 11:, chaque demi-arceau extrême 5a.1 (ou 5b.1 ou 5a.n ou 5b.n) et le pourtour du dosseret 3 correspondant sont profilés pour pouvoir s'emboîter l'un dans l'autre lors de la rétraction et assurer ainsi la fixation extrême du bâchage. Dans l'exemple représenté, chaque demi-arceau est un profilé en U 61 se présentant côté femelle en regard du dosseret 3 dont le pourtour 62 constitue la partie mâle d'emboîtement. Sur ce pourtour sont soudés un tube 63 et un méplat 64, tandis qu'une garniture d'étanchéité 65, en mousse par exemple, est logée dans le profilé d'arceau 61. Lors de la rétraction des arceaux, la garniture 65 se déforme et délimite, entre le tube 63 et le méplat 64, un vide de décompression 66, l'étanchéité de la jonction étant ainsi assurée de façon parfaite.

Pour favoriser le centrage du profilé 61 sur le pourtour 62 en fin de positionnement longitudinal, décrit ci-après, de l'arceau extrême correspondant, les ailes du profilé 61 sont prolongées par des rebords inclinés 61p susceptibles de coopérer avec le pourtour du dosseret.

Bien entendu, avant d'exécuter cette fixation étanche des arceaux extrêmes 5.1 et 5.n sur les dosserets, il faut aussi assurer automatiquement le positionnement longitudinal final desdits arceaux. A cet effet, quatre vérins de positionnement 67, 68, 69 et 70 sont prévus pour coopérer respectivement avec les ferrures 42 a.1, 42 b.1, 42 a.n et 42 b.n des demi-arceaux.

Suivant la première forme de réalisation illustrée par les figures 6 et 7 pour le vérin 70, le cylindre 71 de ce vérin est articulé autour d'un axe 72 dans une chape 73 fixée à l'extrémité libre du rail 48. La tige de piston 74 dudit vérin est prolongée par une tête 75 portant un doigt 76 dont les extrémités font saillie des deux côtés et traversant des lumières de guidage 77 ménagées dans deux plaques 78 verticales fixées au rail 48. Ces lumières présentent une partie horizontale 77h dirigée vers le dosseret 3 conjugué à l'arceau 5.n et une partie en rampe inclinée descendante 77r dirigée vers le dosseret 3 opposé conjugué à l'arceau 5.1.

Lorsque le doigt 76 est situé dans la partie horizontale 77h des lumières de guidage, ses extrémités font saillie en regard et au niveau d'un taquet 79 prolongeant la ferrure 42b.n du demi-arceau 5b.n et respectivement d'une butée 80 fixée au dosseret 3. Par contre, lorsque le doigt 76 est situé en bas de la partie descendante 77r des lumières de guidage, il se trouve placé hors de la trajectoire suivie par le taquet 79.

Dans ces conditions, pour positionner l'arceau 5.n dont les moitiés sont écartées, il suffit de le tirer à la main pour que les taquets 79 de ses deux ferrures 42a.n et 42b.n soient situés sensiblement dans la partie horizontale 77h des lumières de guidage (les vérins 69 et 70 étant en position allongée et inclinée de neutralisation représentée en trait interrompu sur la figure 5). Il faut ensuite alimenter lesdits vérins 69 et 70 pour les rétracter de façon que les doigts 76 remontent les parties descendantes 77r des lumières et poursuivent leur course dans les parties horizontales. Leurs extrémités extérieures rencontrent les taquets 79 et entraînent l'arceau 5n. Lorsque leurs extrémités intérieures sont arrêtées par les butées 80 du dosseret correspondant, ledit arceau s'immobilise en regard de celui-ci. Cet arceau peut alors être rétracté avec les autres par alimentation du vérin 59, ce qui a pour effet de lui faire coiffer avec étanchéité le dosseret conjugué.

Suivant la deuxième forme de réalisation illustrée par les figures 8 à 10, le montage de chaque vérin est conçu pour que la cinématique puisse s'animer dans un espace restreint, ce qui est le cas pour les wagons du chemin de fer anglais dont le gabarit est relativement limité.

Cette deuxième forme de réalisation concerne le vérin 68 dont le cylindre 28 est fixé sur le dosseret 3 sous le plateau 2. La tige de piston 29 de ce vérin est mobile en translation le long de son axe et en rotation autour de celui-ci. Près de son extrémité libre, cette tige 29 est munie d'un doigt pousseur 30 qui, dans la position représentée en trait plein sur la figure 10 et la figure 9, est situé en regard d'un taquet 31 faisant saillie sur la barrette 49 reliant les deux demi-arceaux 5b.1 et 5b.2, tandis que dans la position représentée en trait mixte sur la figure 10 et en trait plein sur la figure 9, il est situé au-dessus de la trajectoire suivie par ledit taquet 31 lorsque lesdits demi-arceaux sont écartés et soulevés par le rail 48 correspondant. Pour passer d'une position à l'autre, il faut que la tige de piston 29 tourne autour de son axe pendant une partie de sa translation, ce qui est obtenu par une came fixe coopérant avec le doigt 30.

Dans l'exemple représenté, cette came est constituée par une plaque cylindrique 32 prolongeant rigidement le cylindre 28 du vérin 68 et dans laquelle est ménagée une lumière 33 traversée par ledit doigt 31. Cette lumière présente, en se dirigeant à l'opposé du dosseret 3, une partie horizontale 33h, prolongée par une partie en rampe inclinée ascendante 33r.

Dans ces conditions et comme dans la première forme de réalisation, pour positionner l'arceau 5.1 dont les moitiés sont écartées et soulevées par les rails 48, il suffit de le tirer à la main pour que les taquets 31 de ses deux barrettes 49 soient situés sensiblement dans la partie horizontale 33h des lumières de guidage 33, les vérins 67 et 68 étant en position allongée et les doigts 30 de leurs tiges 29 étant relevés et situés en haut des parties ascendantes 33r desdites lumières (figure 8). Il faut ensuite alimenter, lesdits vérins 67 et 68 pour les rétracter de façon que les doigts 30 descendent les parties pentues 33r des lumières et poursuivent leur course dans les parties horizontales 33h. Lesdits doigts rencontrent alors les taquets 31 et entraînent l'arceau 5.1. En fin de course déterminée par exemple par l'extrémité des lumières qui peut être munie d'un moyen de règlage, l'arceau 5.1 s'immobilise en regard du dosseret 3. Cet arceau peut alors être rétracté avec les autres par alimentation du vérin 59 (figure 2) ou 22 (figure 3), ce qui a pour effet de le verrouiller avec étanchéité sur le dosseret conjugué.

Bien entendu, le wagon doit être équipé d'un circuit hydraulique, lequel est schématisé sur la figure 12. Ce circuit comporte un distributeur manuel D avec renvois de commande aux deux extrémités du véhicule où se trouvent deux pompes à main P1 et P2. Les tubulures d'aspiration de ces pompes sont reliées par des canalisations 81 et 82 à un réservoir de fluide 83 auquel parvient une canalisation 84 de vidange du circuit raccordée à une tubulure 85 du corps du distributeur D. Les tubulures de refoulement desdites pompes sont branchées en dérivation' sur une tubulure 86 du corps du distributeur D par des canalisations 87 et 88 équipées de clapets anti-retour C1 et C2, cette tubulure 87 pouvant dés lors être alimentée indépendamment par la pompe P1 ou la pompe P2 ou les deux pompes P1 et P2.

En regard des tubulures 85 et 86, le corps du distributeur D présente des tubulures de distribution 89 et 90 susceptibles d'être branchées entre elles de façon directe si le tiroir de ce distributeur occupe la position de fermeture DF et de façon croisée si ledit tiroir occupe la position d'ouverture DO.

La tubulure 90 est branchée :
- d'une part, en dérivation par des canalisations 91 à travers un clapet piloté commun CP3 sur les chambres annulaires des vérins de positionnement 67 à 70.
- et, d'autre part, en série par une canalisation 91 à travers des organes de fin de course hydrauliques FC1, FC2, FC3 et FC4 et un clapet piloté CP1 sur la chambre annulaire du vérin d'écartement 59 ou 22, ces fins de course pouvant être des clapets antiretour à commande mécanique ou des distributeurs à tiroir commandés mécaniquement.

La tubulure 89 est branchée :
- d'une part, en dérivation par des canalisations 92 sur les chambres pleines des vérins de positionnement 67 à 70,
- et, d'autre part, en série par une canalisation 93 à travers un clapet piloté CP2 sur la chambre pleine du vérin d'écartement 59 ou 22.

Le clapet CP3 des chambres annulaires des vérins de positionnement 67 à 70 est piloté par une dérivation 94 prise sur la canalisation 92 des chambres pleines de ces vérins. Le clapet CP1 de la chambre annulaire du vérin d'écartement 59 ou 22 est piloté par une dérivation 95 prise sur la canalisation 93 de la chambre pleine de ce vérin. Le clapet CP2 de la chambre pleine du vérin d'écartement 59 ou 22 est piloté par une dérivation 96 prise sur la canalisation 91 de la chambre annulaire de ce vérin.

Les organes de fin de course hydrauliques FC1 à FC4 comportent un poussoir p et un ressort r permettant, suivant que l'un ou l'autre est prédominant, de brancher en direct "d" la canalisation 91 sur le vérin 59 ou 22 ou bien d'interrompre ce branchement en "c" avec retour possible. Les quatre poussoirs p sont situés sur la trajectoire des quatre demi-arceaux extrêmes 5a.1, 5b.1, 5a.n et 5b.n pour que ceux-ci les actionnent lorsqu'ils sont parvenus en regard des dosserets 3.

Lorsque le wagon est fermé, toutes les tiges des vérins 59 ou 22 et 67 à 70 sont rentrées. Par ailleurs, lorsqu'on n'agit pas sur les pompes P1 et/ou P2, les quatre vérins de positionnement 67 à 70 sont verrouillées en position rentrée par le clapet piloté CP3 et le vérin d'écartement 59 ou 22 des rails est verrouillé dans ses deux positions par les clapets pilotés CP1 et CP2.

Pour ouvrir le wagon, le distributeur D est mis par l'opérateur en position d'ouverture DO et le ou les pompes P1, P2 sont manoeuvrées. Les clapets CP1 et CP3 s'ouvrent et les tiges des cinq vérins sortent. Le vérin 59 ou 22 fait pivoter les rails 48, de sorte que les arceaux 5 s'écartent dans des plans perpendiculaires à l'axe longitudinal du wagon et se soulèvent. Dès lors, les arceaux extrêmes 5.1 et 5.n se déboîtent des dosserets 3. Les vérins 67 à 70 amènent les doigts 76 plus bas que les taquets 79 et, dès lors, les arceaux extrêmes 5.1 et 5.n peuvent être déplacés à la main pour replier la bâche 4 et accéder au chargement par l'une, puis l'autre des extrémités du wagon.

Pour fermer le wagon, l'opérateur amène à la main les arceaux extrêmes 5.1 et 5.n en regard des parties horizontales 77h ou 33h des lumières de guidage. Puis, il met le distributeur D en position de fermeture DF (représentée sur la figure 8) et manoeuvre la ou les pompes P1 et/ou P2. Les quatre organes de fin de course hyrauliques FC1 à FC4 étant en position "c", s'opposent à l'alimentation de la chambre annulaire du vérin 59 ou 22 qui reste allongé et maintient les rails 48 et donc les arceaux 5 en position écartée. Dans un premier temps, la ou les pompes P1, P2 alimentent les chambres annulaires des vérins de positionnement 67 à 70, de sorte que les tiges 74 ou 29 de ceux-ci rentrent et que leurs doigts 76 ou 30 tirent sur les taquets 79 ou 31 jusqu'à leur arrêt sur les butées, position dans laquelle les demi-arceaux 5a.1, 5b.1, 5a.n et 5b.n sont situés précisément en regard des dosserets 3 et les poussoirs p des organes de fin de course hydrauliques FC1 à FC4 sont actionnés pour mettre ces organes en position d. Dès lors, la chambre annulaire du vérin 59 ou 22 est alimentée et la tige rentre en rétractant les arceaux 5. Les arceaux extrêmes 5.1 et 5.n se resserrent sur les dosserets et assurent le verrouillage étanche du bâchage, les pattes 50 s'appuyant sous les rails 48.

**Revendications**

1.- Dispositif de bâchage mécanique pour véhicules divers et notamment pour wagons, comportant une bâche (4) fixée à des arceaux supports (5) sont les extrémités inférieures sont munies de galets (46, 47) roulant sur des rails (48) disposés sur les côtés du véhicule et supportés par le châssis (9) de celui-ci, caractérisé :
      – en ce que chaque arceau (5) est constitué par deux éléments symétriques (5a, 5b) dont les extrémités supérieures, situées dans la zone médiane du véhicule sont articulées l'une sur l'autre autour d'un axe (8) et dont les extrémités inférieures roulantes sont susceptibles d'être écartées du châssis (9) en s'élevant,
      – en ce que chaque rail (48) est supporté par le châssis (9) par l'intermédiaire d'un mécanisme d'écartement (51 ; 21) à deux positions, l'une dans laquelle les arceaux (5) sont rétractés (trait épais) pour passer au gabarit tout en recouvrant le chargement sans y toucher et l'autre (trait fin)

dans laquelle les arceaux (5) sont écartés pour s'éloigner avec la bâche (4) du chargement.

- et en ce que les deux éléments (5a, 5b) de chaque arceau extrême (5.1, 5.n) et le pourtour du dosseret (3) conjugué sont profilés en regard pour pouvoir s'emboîter l'un dans l'autre lors du rapprochement desdits éléments et se déboîter l'un de l'autre lors de l'écartement de ces éléments afin d'assurer le verrouillage du dispositif de bâchage en position de fermeture.

2. Dispositif de bâchage selon la revendication 1, caractérisé en ce qu'une garniture compressible d'étanchéité (65), en mousse notamment, est interposée entre les éléments profilés (61) de chaque arceau extrême et le pourtour profilé (62 à 64) du dosseret conjugué pour assurer l'étanchéité de la jonction entre le dispositif de bâchage et les dosserets.

3. Dispositif de bâchage selon la revendication 1 ou 2, caractérisé en ce que les éléments (5a.1, 5b.1, 5a.n, 5b.n) de chaque arceau extrême (5.1, 5.n) sont profilés en U (61) et contiennent la garniture (65) en mousse, tandis que le pourtour du dosseret conjugué (3) est susceptible de s'emboîter dans ces profilés en U en présente au moins deux éléments saillants (63, 64) destinés à comprimer la garniture pour assurer l'étanchéité et entre lesquels un vide de décompression (66) est ménagé.

4. Dispositif de bâchage selon la revendication 3, caractérisé en ce que les ailes du profilé en U (61) constituant les éléments de chaque arceau extrême présentent des rebords inclinés (61p) de positionnement sur le pourtour (62) du dosseret conjugué.

5. Dispositif de bâchage selon l'une quelconque des revendications 1 à 4,caractérisé en ce que le mécanisme d'écartement (51) de chaque rail (48) est constitué par au moins deux bras (53) fixés à celui-ci et à un arbre (52a ; 52b) qui est monté tournant dans des paliers du châssis (9) et dont l'amplitude de pivotement est limitée à deux positions extrêmes des bras dans lesquelles les galets (46, 47) des arceaux (5a ; 5b) roulant sur le rail considéré sont situés en retrait de la rive correspondante (41) du véhicule, les deux arbres étant accouplés à un dispositif d'actionnement (54 à 60).

6. Dispositif de bâchage selon la revendication 5, caractérisé en ce que le dispositif d'actionnement (22 à 27) des arbres(52a, 52b) d'écartement des rails (48) est constitué par au moins un vérin (22) dont le cylindre (25) et la tige de piston (23) s'étendant entre les arbres (52a, 52b), sont attelés aux équipages pivotants (48, 53) portés par ces arbres, des butées fixes (27a, 27b) limitant la course de levage de chacun de ceux-ci.

7. Dispositif de bâchage selon la revendication 5, caractérisé en ce que le dispositif d'actionnement (54 à 60) des arbres(52a, 52b) d'écartement des rails (48) est constitué par un palonnier (54) monté pivotant (55) dans sa zone médiane, relativement au châssis (9) du véhicule et relié, à ses extrémités, par des bielles de transmission (56a, 56b), à des manivelles (57a, 57b) fixées respectivement aux arbres précités, ce dispositif comprenant également un vérin (59) prenant appui sur le châssis et provoquant son expansion ou sa rétraction.

8. Dispositif de bâchage selon l'une quelconque des revendications précédentes 1 à 7, caractérisé en ce qu'il comporte, pour assurer le positionnement des éléments (5a, 5b) des arceaux extrêmes (5.1, 5.n) en regard des dosserets (3) avant leur emboîtement étanche, quatre vérins (67 à 70) conjugués avec les quatre éléments précités, le composant mobile en translation de chaque vérin présentant en saillie un organe d'attelage (76 ; 30) susceptible de prendre en charge l'élément d'arceau conjugué en fin de course de celui-ci vers le dosseret correspondant.

9. Dispositif de bâchage selon la revendication 8, caractérisé en ce que l'un (28) des composants de chacun des vérins de positionnement (68) est fixé sur le châssis (9) du véhicule, tandis que l'autre composant (29) est muni d'un doigt pousseur (30) traversant au moins une lumière (33) ménagée dans une plaque fixe (32), lumière qui présente une rampe inclinée (33r) précédant, en direction du dosseret correspondant, une partie rectiligne (33h) parallèle au rail conjugué (48) et maintenant le doigt (30) en regard d'un taquet (31) de l'élément d'arceau (5b.1) positionner pour qu'il déplace celui-ci vers ledit dosseret lorsqu'il est actionné par le vérin, la rampe inclinée permettant de faire tourner le composant de vérin porte-doigt autour de son axe et ainsi de placer le doigt hors de la trajectoire suivie par l'élément d'arceau considéré.

10. Dispositif selon la revendication 9, caractérisé en ce que la plaque (32) délimitant la lumière (33) de guidage du doigt (30) est cylindrique et s'étend concentriquement au composant mobile (29) du vérin (68) portant le doigt (30), cette plaque étant fixée sur le composant immobile (28) dudit vérin, lui-même fixé sur le châssis (9).

11. Dispositif de bâchage selon la revendication 8, caractérisé en ce que l'un des composants (71) de chacun des vérins de positionnement (67 à 70) est articulé (72) sur l'extrémité de rail (48) correspondante, tandis que l'autre composant (74) est muni d'un doigt (76) qui, d'une part, est guidé en translation horizontale puis pentue dans au moins une lumière (77) d'une plaque (78) fixée au rail considéré (48) et, d'autre part, est susceptible de coopérer seulement dans la partie horizontale de sa trajectoire avec un taquet (79) solidaire du pied (42) de l'élément d'arceau correspondant.

12. Dispositif de bâchage selon l'une quelconque des revendications 8 à 11, caractérisé en ce que le vérin (59 ; 22) d'écartement des arceaux et les vérins (57 à 70) de positionnement de ceux-ci sont susceptibles d'être branchés, par l'intermédiaire d'un distributeur manuel (D), sur au moins une pompe à main (P1, P2) portée par le véhicule et intégrée dans un circuit hydraulique comprenant, d'une part, des clapets pilotés (CP1 et CP3) verrouillant les vérins et, d'autre part, des organes de fin de course (FC1 à FC4) commandés par les éléments d'arceaux (5a.1, 5b.1, 5a.n, 5b.n) et montés en série pour que le vérin d'écartement ne soit alimenté pour provoquer la rétraction des arceaux que lorsque les vérins de positionnement sont tous parvenus en fin de course.

**Patentansprüche**

1. Mechanische Abdeckvorrichtung für verschiedene Fahrzeuge, insbesondere für Waggons, umfassend eine Abdeckung (4), die auf Trägerbögen (5) befestigt ist, deren untere Enden mit Rollen (46, 47) versehen sind, die auf an den Seiten des Fahrzeugs angeordneten und am Fahrgestell (9) desselben abgestützten Schienen (48) laufen, dadurch gekennzeichnet:
- daß jeder Bogen (5) durch zwei symmetrische Elemente (5a, 5b) gebildet ist, deren obere, im mittleren Abschnitt des Fahrzeugs befindliche Enden um eine Achse (8) aneinander angelenkt sind und deren untere, rollende Enden durch Abheben vom Fahrgestell (9) entfernbar sind,
- daß jede Schiene (48) unter Zwischenschaltung eines Spreizmechanismus (51; 21) in zwei Positionen am Fahrgestell (9) abstützbar ist, u.zw. in einer Position, in der die Bögen (5) zwecks Übergehens in die Begrenzungslinie bei Überdecken der Ladung ohne Berühren derselben eingezogen sind (starke Linie) und in einer anderen (schwache Linie), in der die Bögen (5) zwecks Entfernens zusammen mit der Abdeckung (4) von der Ladung auseinandergespreizt sind,
- und daß die beiden Elemente (5a, 5b) jedes Endbogens (5.1, 5.n) und der äußere Umfang der zugehörigen Endwand (3) zwecks Ineinanderfügens bei einer Annäherung der Elemente und Auseinandergehens beim Auseinanderspreizen dieser Elemente zur Sicherung der Arretierung der Abdeckvorrichtung in Schließposition an den einander zugewandten Seiten mit einem Profil versehen sind.

2. Abdeckvorrichtung nach Anspruch 1, dadurch gekennzeichnet, daß eine zusammendrückbare Dichtungspackung (65), insbesondere aus Schaum, zwischen den Profilelementen (61) jedes Endbogens und dem Profilumfang (62 bis 64) der zugehörigen Endwand zur Gewährleistung der Dichtheit der Verbindungstelle zwischen Abdeckvorrichtung und Endwänden eingesetzt ist.

3. Abdeckvorrichtung nach Anspruch 1 oder 2, dadurch gekennzeichnet, daß die Elemente (5a.1, 5b.1, 5a.n, 5b.n, jedes Endbogens (5.1, 5.n) ein U-Profil (61) aufweisen und die Schaumpackung (65) enthalten, wobei der äußere Umfang der zugehörigen Endwand (3) in diese U-Profile einfügbar ist und mindestens zwei vorspringende Elemente (63, 64) zum Zusammendrücken der Packung zwecks Gewährleistung der Dichtheit aufweist, zwischen welchen ein Dekompressionsraum (66) vorgesehen ist.

4. Abdeckvorrichtung nach Anspruch 3, dadurch gekennzeichnet, daß die Schenkel des U-Profils (61), die die Elemente jedes Endbogens bilden, nach außen geneigte Endstücke (61p) zur Positionierung am äußeren Umfang (62) der zugehörigen Endwand aufweisen.

5. Abdeckvorrichtung nach einem der Ansprüche 1 bis 4, dadurch gekennzeichnet, daß der Spreizmechanismus (51) jeder Schiene (48) aus mindestens zwei an dieser und einer in Lagern des Fahrgestells (9) drehbar gelagerten Welle (52a;

52b) befestigten Armen (53) besteht, deren Schwenkbereich auf zwei Endpositionen der Arme beschränkt ist, in denen die auf der betreffenden Schiene laufenden Rollen (46, 47) der Bögen (5a; 5b) vom jeweiligen Rand (41) des Fahrzeugs versetzt sind, wobei die beiden Wellen an eine Betätigungseinrichtung (54 bis 60) angekoppelt sind.

6. Abdeckvorrichtung nach Anspruch 5, dadurch gekennzeichnet, daß die Betätigungseinrichtung (22 bis 27) der Wellen (52a, 52b) zum Auseinanderbringen der Schienen (48) durch mindestens einen Stelltrieb (22) gebildet ist, dessen Zylinder (25) und Kolbenstange (23), die sich zwischen den Wellen (52a, 52b) erstrecken, an auf diesen Wellen angeordneten Schwenksystemen (48, 53) angekoppelt sind, wobei fixe Anschläge (27a, 27b) den Hub eines jeden davon beschränken.

7. Abdeckvorrichtung nach Anspruch 5, dadurch gekennzeichnet, daß die Betätigungseinrichtung (54 bis 60) der Wellen (52a, 52b) zum Auseinanderbringen der Schienen (48) durch ein Ausgleichgestänge (54) gebildet ist, welches in seinem in bezug auf das Fahrgestell (9) des Fahrzeugs mittleren Abschnitt schwenkbar befestigt (55) und an seinen Enden über Übertragungsstangen (56a, 56b) mit an der jeweiligen Welle befestigten Kurbeln (57a, 57b) verbunden sind, wobei die Einrichtung auch einen Stelltrieb (59) umfaßt, der sich am Fahrgestell abstützt und deren Auszug bzw. deren Einzug bewirkt.

8. Abdeckvorrichtung nach einem der vorhergehenden Ansprüche 1 bis 7, dadurch gekennzeichnet, daß sie zur Sicherung der Positionierung der Elemente (5a, 5b) der Endbögen (5.1, 5.n) an den Endwänden (3), bevor diese dichtend ineinandergefügt werden, vier zu den vier vorgenannten Elementen gehörende Stelltriebe (67 bis 70) umfaßt, wobei die verschiebebewegliche Komponente jedes Stelltriebs vorspringend ein Kupplungsorgan (76; 30) aufweist, welches das zugehörige Bogenelement am Hubende desselben zur entsprechenden Endwand hin drückt.

9. Abdeckvorrichtung nach Anspruch 8, dadurch gekennzeichnet, daß eine (28) der Komponenten jedes Positionier-Stelltriebs (68) am Fahrgestell (9) des Fahrzeugs befestigt ist, während die andere Komponente (29) mit einem Druckfinger (30) versehen ist, der durch mindestens ein in einer fixen Platte (32) vorgesehenes Langloch (33) reicht, welches Langloch eine geneigte Rampe (33r) aufweist, der in Richtung zur entsprechenden Endwand ein geradliniger, zur zugehörigen Schiene (48) paralleler Abschnitt (33h) vorausgeht und die den Finger (30) an einen Vorsprung (31) des zu positionierenden Bogenelements (5b.1) hält, damit er dieses bei Betätigung durch den Stelltrieb zur Endwand verschiebt, wobei die geneigte Rampe die den Finger tragende Komponente des Stelltriebs um ihre Achse dreht und so den Finger aus der vom betreffenden Bogenelement zurückgelegten Bahn kommen läßt.

10. Vorrichtung nach Anspruch 9, dadurch gekennzeichnet, daß die das Langloch (33) zur Führung des Fingers (30) begrenzende Platte (32) zylindrisch ist und sich konzentrisch zur mobilen Komponente (29) des Stelltriebs (68), die den Finger (30) trägt, erstreckt, wobei die Platte an der immobilen Komponente (28) des Stelltriebs befestigt ist, welcher wiederum am Fahrgestell (9) befestigt ist.

11. Abdeckvorrichtung nach Anspruch 8, dadurch gekennzeichnet, daß eine der Komponenten (71) jedes Positionier-Stelltriebs (67 bis 70) am Ende der jeweiligen Schiene (48) angelenkt (72) ist, während die andere Komponente (74) mit einem Finger (76) versehen ist, der einerseits in horizontaler, dann geneigter Verschiebebewegung in mindestens einem Langloch (77) einer an der betreffenden Schiene (48) befestigten Platte (78) geführt ist und anderseits nur im horizontalen Abschnitt seiner Bahn mit einem einstückig mit dem Fuß (42) des jeweiligen Bogenelements ausgebildeten Vorsprung (79) zusammenwirken kann.

12. Abdeckvorrichtung nach einem der Ansprüche 8 bis 11, dadurch gekennzeichnet, daß der Stelltrieb (59; 22) zum Spreizen der Bögen und die Stelltriebe (57 bis 70) zum Positionieren derselben unter Zwischenschaltung eines händischen Verteilers (D) an mindestens eine Handpumpe (P1, P2) angeschlossen werden können, die auf dem Fahrzeug angeordnet und in einem Hydraulikkreis integriert ist, welcher einerseits die Stelltriebe blockierende gesteuerte Ventile (CP1 und CP3) und anderseits von den Bogenelementen (5a.1, 5b.1, 5a.n, 5b.n) gesteuerte und in Serie geschaltete Endlageorgane (FC1 bis FC4) umfaßt, damit der Spreizstelltrieb zur Bewirkung des Einzugs der Bögen nur dann beaufschlagt wird, wenn alle Positionier-Stelltriebe am Hubende angelangt sind.

**Claims**

1. Mechanical tarpaulin-covering device for various vehicles, especially for open railway cars, comprising a tarpaulin (4) fixed to supporting bows (5) of which the lower ends are provided with runners (46, 47) running on rails (48) fixed on either side of the vehicle and supported by the vehicle chassis (9), characterized in that:
   - each bow (5) is constituted by two symmetrical elements (5a, 5b) of which the upper ends, situated in the median zone of the vehicle, are articulated one on the other about a pin (8) and of which the rolling lower ends are adapted to be moved away from the chassis (9) by being raised,
   - each rail (48) is supported by the chassis (9) via a two-position spacing out mechanism (51; 21), one position in which the bows (5) are retracted (thick lines) to pass to the clearance gauge while covering up the load without contacting it, and the other position (thin lines) in which the bows (5) are set aside in order to be moved away together with the tarpaulin cover (4) from the load,
   - and the two elements (5a, 5b) of each extreme bow (5.1, 5.n) and the periphery of the conjugated load back rest (3) are profiled in opposite relationship in order to be able to fit one into the other when said elements come closer together and to disengage one from the other when said elements move apart in order to lock the tarpaulin-covering device in the closed position.

2. Tarpaulin-covering device according to claim 1, characterized in that a compressible packing (65), for example in foam, is interposed between the sectional elements (61) of each extreme bow and the profiled outline (62 to 64) of the conjugated load back rest in order to ensure a tight joint between the tarpaulin-covering device and the back rests.

3. Tarpaulin-covering device according to claim 1 or 2, characterized in that the elements (5a.1, 5b.1, 5a.n, 5b.n) of each outermost bow (5.1, 5.n) are U-shaped (61) and contain the foam packing (65), whereas the outline of the conjugated back rest (3) is adapted to fit into said U-sections and presents at least two projecting elements (63, 64) designed to compress the packing to achieve tightness and between which is provided a decompression cavity (66).

4. Tarpaulin-covering device according to claim 3, characterized in that the flanges of the U-section (61) which constitute the elements of each outermost bow have bent edges (61p) for positioning them on the periphery (62) of the conjugated back rest.

5. Tarpaulin-covering device according to any one of claims 1 to 4, characterized in that the spacing out mechanism (51) of each rail (48) is constituted by at least two arms (53) fixed to the rail and to a shaft (52a; 52b) which is mounted for pivoting in bearings of the chassis (9) and which the pivoting amplitude is limited to two outermost positions of the arms in which the runners (46, 47) of the bows (5a; 5b) running on the considered rail are offset with respect to the corresponding edge (41) of the vehicle, the two shafts being coupled to an actuating device (54 to 60).

6. Tarpaulin-covering device according to claim 5, characterized in that the actuating device (22 to 27) of the shafts (52a, 52b) spacing out the rails (48) is constituted by at least one jack (22) of which the cylinder (25) and the piston rod (23) extending between the shafts (52a, 52b), are coupled to the pivoting systems (48, 53) carried by said shafts, fixed stops (27a, 27b) limiting the lifting stroke of each one of said systems.

7. Tarpaulin-covering device according to claim 5, characterized in that the device (54 to 60) provided for actuating the shafts (52a, 52b) spacing out the rails (48) is constituted by a swing bar (54) mounted for pivoting (55) in its median zone, relatively to the chassis (9) of the vehicle and coupled at its ends, via transmission rods (56a, 56b), to cranks (57a, 57b) respectively fixed to said shafts, said device futher comprising a jack (59) resting on the chassis and causing the expansion or retraction thereof.

8. Tarpaulin-covering device according to any one of the preceding claims 1 to 7, characterized in that it comprises, in order to achieve positioning of the elements (5a, 5b) of the outermost bows (5.1, 5.n) in facing relationship to the load back rests (3) before these are tightly fitted in, four jacks (67 to 70) conjugated with said four elements, the elements of each jack which is movable according to a translatory movement being equipped with a projecting coupling member (76; 30) adapted to pick up the conjugaged bow element at end-of-stroke

17

EP 0 222 633 B1

and to take it towards the corresponding back rest.

9. Tarpaulin-covering device according to claim 8, characterized in that one (28) of the components of each one of the positioning jacks (68) is fixed on the chassis (9) of the vehicle, whereas the other component (29) is equipped with a pushing finger (30) traversing at least one slot (33) provided in a fixed plate (32), which slot has an inclined ramp (33r) which precedes, in the direction of the corresponding load back rest, a rectilinear part (33h) parallel to the conjugated rail (48) and holding the finger (30) in facing relationship to a tappet (31) of the bow element (5b.1) to be positioned so that it moves the latter towards said back rest when it is actuated by the jack, the inclined ramp permitting to rotate the finger-carrying jack component about its axis and thus to place the finger outside the path followed by the considered bow element.

10. Device according to claim 9, characterized in that the plate (32) defining the slot (33) guiding the finger (30) is cylindrical and extends concentrically to the movable component (29) of the jack (68) carrying the finger (30), said plate being secured on the immobile component (28) of said jack, which is itself secured on the chassis (9).

11. Tarpaulin-covering device according to claim 8, characterized in that one of the components (71) of each one of the positioning jacks (67 to 70) is articulated (72) on the corresponding end of rail (48), whereas the other component (74) is equipped with a finger (76) which, on the one hand, is guided in horizontal and then in sloping translation, in at least one slot (77) of a plate (78) fixed to the considered rail (48) and, on the other hand, is adapted to cooperate only in the horizontal part of its path, with a tappet (79) fast with the foot (42) of the corresponding bow element.

12. Tarpaulin-covering device according to any one of claims 8 to 11, characterized in that the jack (59; 22) for spacing out the bows and the jacks (57 to 70) for positioning same are adapted to be connected, via a hand-operated distributor (D), with a hand-pump (P1, P2) carried by the vehicle and integrated in a hydraulic circuit comprising, on the one hand, controlled valves (CP1 and CP3) locking the jacks and, on the other hand, end-of-stroke members (FC1 to FC4) controlled by bow elements (5a.1, 5b.1, 5a.n. 5b.n) and mounted in series so that the spacing out jack is not supplied casing the retraction of the bows only when the positioning jacks have all reached the end of their stroke.

Fig.1

Fig.4

Fig.5

# Fig. 2

Fig.3

Fig. 6

Fig. 7

Fig. 11

Fig.8

Fig.9

Fig.10

Fig.12